# EUROPEAN PATENT APPLICATION

(11) **EP 4 570 523 A1**
(43) Date of publication of application: **18.06.2025**
(21) Application number: 24214532.4
(22) Date of filing: 21.11.2024
(51) Int. Cl.: B60C 11/03, B60C 11/12

(54) **PNEUMATIC TIRE**

(30) Priority: 11.12.2023 JP 2023208362
(71) Applicant: TOYO TIRE CORPORATION, Itami-shi, Hyogo 6640847 (JP)
(72) Inventor: TSUTSUMI, Koki, Itami-shi, 6640847 (JP)
(74) Representative: von Hirschhausen, Helge

(57) **Abstract**

A pneumatic tire 1 including a tread (10), and having a specified rotational direction. The tread (10) includes a plurality of main grooves (20, 21) extending from a portion of the tread (10) adjacent to a tread center line CL toward a portion of the tread (10) adjacent to a ground contact end E1, E2, and a first block set (30, 50) and a second block set (40, 60), disposed along the main grooves (20, 21) and arranged alternately along the tire circumferential direction with the main grooves (20, 21) being disposed between the first block set (30, 50) and the second block set (40, 60). The main groove (20, 21) is inclined more, with respect to a tire axial direction, in a portion adjacent to the tread center line CL than in a portion adjacent to the ground contact end E1, E2. Each of the first block set (30, 50) and the second block set (40, 60) includes a plurality of blocks, and the first block set (30, 50) and the second block set (40, 60) include different numbers of blocks.

## Description

### TECHNICAL FIELD

The present invention relates to a pneumatic tire, and more particularly to a pneumatic tire that rotates in a specified direction.

### BACKGROUND

Directional tires that rotate in a specified rotational direction are known. JP 6438768 B, for example, discloses a pneumatic tire having a tread including main grooves extending from portions of the tread adjacent to a tread center line or equator toward a ground contact end, and blocks arranged along the main grooves and disposed alternately with the main grooves in the tire circumferential direction. In the tread pattern disclosed in JP 6438768 B, the blocks include a center block located adjacent to the tire tread center line and a shoulder block located adjacent to the ground contact end. The center block and the shoulder block are serially arranged along the tire circumferential direction.

### SUMMARY

Pneumatic tires with high noise performance have been desired in recent years. Noise that is made during traveling of a vehicle includes striking sound generated by the blocks impacting the road surface. As described above, the pneumatic tire disclosed in JP 6438768 B includes the center blocks and the shoulder blocks serially arranged along the tire circumferential direction. This configuration makes it likely to generate striking sound as a result of each block impacting the road surface at predetermined intervals to thereby generate peak values of the striking sound, which causes noise.

A pneumatic tire according to the present invention includes a tread and has a specified rotational direction. The tread includes a plurality of main grooves extending from a portion of the tread adjacent to a tread center line toward a portion of the tread adjacent to a ground contact end, the main grooves being arranged at intervals along a tire circumferential direction; and a first block set and a second block set disposed along the main grooves and arranged alternately along the tire circumferential direction, with the main grooves being disposed between the first block set and the second block set. Each of the main grooves is inclined more, with respect to a tire axial direction, in a portion adjacent to the tread center line than in a portion adjacent to the ground contact end. Each of the first block set and the second block set includes a plurality of blocks. The first block set and the second block set include different numbers of blocks.

The pneumatic tire according to the present invention enables reduction in tire noise during traveling of a vehicle.

### BRIEF DESCRIPTION OF DRAWINGS

An embodiment of the present invention will be described by reference to the following figures, wherein:
FIG. 1 is a perspective view partially illustrating a pneumatic tire according to an example embodiment;
FIG. 2 is a plan view illustrating the pneumatic tire according to the example embodiment;
FIG. 3 is an enlarged view partially illustrating a tread pattern in the pneumatic tire according to the example embodiment;
FIG. 4 schematically illustrates a change of a ground contact line of the tread during travelling of a vehicle with the pneumatic tire according to the example embodiment; and
FIG. 5 indicates a range of variation of the contact length at a front contact edge of the pneumatic tire according to the example embodiment during a full rotation of the tire.

### DESCRIPTION OF EMBODIMENTS

A pneumatic tire according to an example embodiment of the present invention will be described in detail with reference to the drawings. The embodiment described below is only an example, and therefore, the present invention is not limited to the embodiment. In addition, selective combinations of elements of the embodiment described below are within the range of the invention.

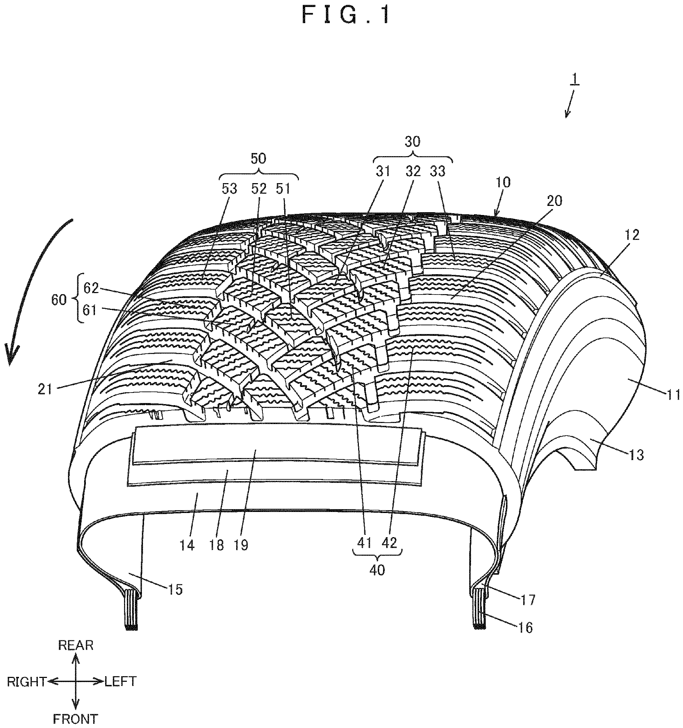

FIG. 1 is a perspective view illustrating a pneumatic tire 1 according to an example embodiment, and also illustrates an internal structure of the pneumatic tire 1. As illustrated in FIG. 1, the pneumatic tire 1 includes a tread 10 that is a portion coming into contact with a road surface, a pair of side walls 11 disposed on opposite sides of the tread 10, a pair of beads 13 disposed radially inward of the tire with respect of the side walls 11. The pneumatic tire 1 further includes a carcass 14 extending between the beads 13 and an inner liner 15 disposed radially inward of the tire with respect to the carcass 14.

The pneumatic tire 1 is a directional tire that rotates in a specified rotational direction. In the present specification, the "rotational direction" of the tire refers to the rotational direction of the tire mounted on a vehicle that is traveling forward. Further, the term "left and right" that is used for ease of explanation in the present specification refers to left and right with respect to the traveling direction of a vehicle on which the tire is mounted. The pneumatic tire 1 preferably has an indication showing the mounting direction with respect to a vehicle. The pneumatic tire 1 has, on a side face, at least one of characters or arrows indicating the rotational direction, for example. FIG. 1 shows an arrow indicating the rotational direction of the tire. Some of the drawings, including FIG. 1, include arrows indicating the forward, rearward, leftward, and rightward directions with respect to the forward moving direction of the vehicle.

The present specification further includes, regarding the blocks constituting the tread 10, for example, terms "leading side" and "trailing side". The "leading side" of a block, for example, refers to a direction in which the block first comes into contact with a road surface when the pneumatic tire 1 rotates in the direction in which the vehicle travels forward (forward in the rotational direction), and the "trailing side" refers to a direction in which the block comes into contact with the road surface later (rearward in the rotational direction).

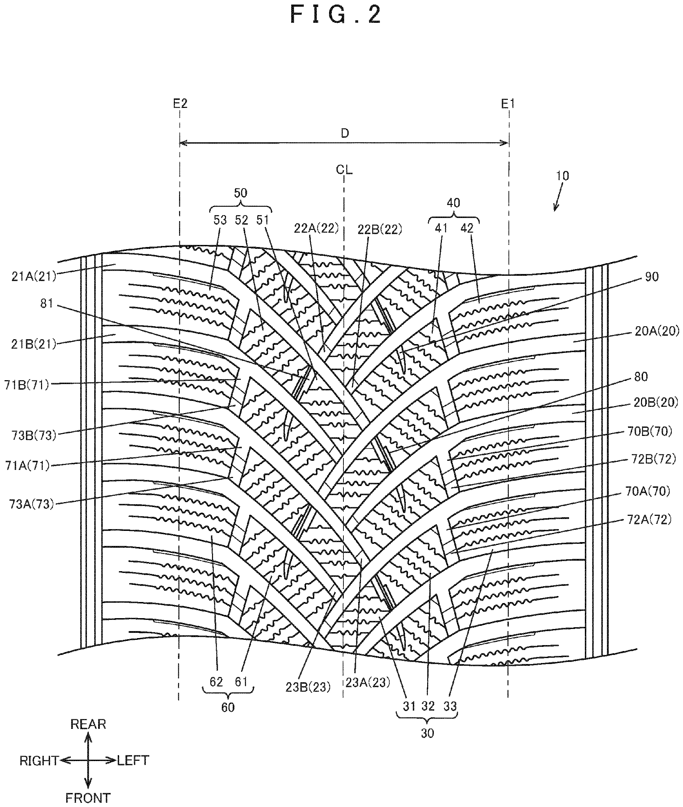

The tread 10 includes main grooves 20 and 21. The main grooves 20, 21 extend from a region of the tread 10 adjacent to a tread center line or equator CL (see FIG. 2) toward a ground contact end, and have a greater angle of inclination with respect to the tire axial direction in a region closer to the equator CL than in a region adjacent to the ground contact end. More specifically, the main groove 20 extends from a region adjacent to the equator CL toward the ground contact end E1 (see FIG. 2), and the main groove 21 extends from a region adjacent to the equator CL toward the ground contact end E2 (see FIG. 2).

The tread center line, which is also referred to as "equator", CL as used herein refers to a line along the tire circumferential direction that passes a center of the tread 10 in the tire axial direction (a position from the respective ground contact ends E1 and E2 by an equal distance). Further, the ground contact ends E1 and E2 as used in the specification are defined as opposite ends, in the tire axial direction, of a region that contacts a flat road surface when a predetermined load is applied to the unused pneumatic tire 1 mounted on a normal rim and inflated to a normal internal pressure. The predetermined load for a passenger vehicle corresponds to 88% of the normal load.

The "normal rim" as used herein refers to a rim defined according to the tire standard, and is a "standard rim" according to the Japanese Automobile Tire Manufacturing Association (JATMA) and is a "Measuring Rim" according to the Tire and Rim Association (TRA) and the European Tire and Rim Technical Organization (ETRTO). The "normal internal pressure" is a "maximum air pressure" according to JATMA, the maximum value in Table "TIRE LOAD LIMITS AT VARIOUS COLD INFLATION PRESSURES" in TRA, and an "INFLATION PRESSURE" according to ETRTO. The normal internal pressure is typically 250 kPa for passenger tires. However, the normal internal pressure is 290 kPa for tires having labels of Extra Load or Reinforced. The normal load is a "maximum load rating" according to JATMA, the maximum value described in Table "TIRE LOAD LIMITS AT VARIOUS COLD INFLATION PRESSURES" according to TRA, and a "LOAD CAPACITY" according to ETRTO. The normal load for racing kart tires is 392 N.

The tread 10 includes a first block set 30 and a second block set 40 each disposed along the main groove 20 and including a plurality of blocks, and a first block set 50 and a second block set 60 each disposed along the main groove 21 and including a plurality of blocks. The first block set 30 and the second block set 40 are alternately disposed in the tire circumferential direction, with the main groove 20 being interposed between the first block set 30 and the second block set 40, and the first block set 50 and the second block set 60 are alternately disposed in the tire circumferential direction, with the main groove 21 being interposed between the first block set 50 and the second block set 60. The blocks are protrusions separated from each other by the main grooves and slits, and protruding outward in the tire radial direction. Thus, regions separated from each other by sipes are not the blocks. In the present specification, a groove having a width of 1.5 mm or more is defined as a slit, and a groove having a width less than 1.5 mm is defined as a sipe.

As will be described in detail below, the first block set 30 includes three blocks, and the second block set 40 includes two blocks. Specifically, the first block set 30 includes a first center block 31 located adjacent to the equator CL, a first shoulder block 33 located adjacent to the ground contact end E1, and a first intermediate block 32 disposed between the first center block 31 and the first shoulder block 33. The second block set 40 includes a second center block 41 located adjacent to the equator CL, and a second shoulder block 42 located adjacent to the ground contact end E1. Disposing the main grooves 20 and 21 to have a greater angle of inclination with respect to the tire axial direction in a region of the tread 10 adjacent to the equator CL than in a region of the tread 10 adjacent to the ground contact end E1, E2, and also varying the number of blocks included in each block set, enables the periods of striking sound generated by the tread 10 hitting the road surface to be shifted from each other. This results in dispersion of the frequency of the striking sound to thereby reduce the noise during traveling. In the present embodiment, the first shoulder block 33 and the second shoulder block 42 have the same shape.

The first block set 50, similar to the first block set 30, includes three blocks, and the second block set 60, similar to the second block set 40, includes two blocks. Specifically, the first block set 50 includes a first center block 51 located adjacent to the equator CL, a first shoulder block 53 located adjacent to the ground contact end E2, and a first intermediate block 52 disposed between the first center block 51 and the first shoulder block 53. The second block set 60 includes a second center block 61 located adjacent to the equator CL, and a second shoulder block 62 located adjacent to the ground contact end E2. In the present embodiment, the first shoulder block 53 and the second shoulder block 62 have the same shape.

The side wall 11 is disposed, at each side of the tread 10, annularly along the tire circumferential direction. The side wall 11 is a portion of the pneumatic tire 1 that protrudes furthest outward in the tire axial direction, and is gently curved to protrude outward in the tire axial direction. The side wall 11 has a function to prevent damage to the carcass 14. The side wall 11 is designed to be bent most at the time of the cushioning operation of the pneumatic tire 1, and is typically made of a soft rubber having fatigue performance.

The pneumatic tire 1 may include a side rib 12 disposed between each ground contact end E1, E2 of the tread 10 and a portion of the side wall 11 protruding furthest outward in the tire axial direction. The side rib 12 protrudes outward in the tire axial direction and is disposed annularly along the tire circumferential direction. The portions of the pneumatic tire 1 from the ground contact ends E1 and E2 or from regions close to the ground contact ends E1 and E2, to the left and right side ribs 12 are also referred to as shoulders or buttress regions.

The side wall 11 normally includes letters, numbers, and symbols, as examples, that are called serial code. The serial code includes information such as a size code, a production time (year and week of production), and a production place (factory code).

The bead 13 is located radially inward with respect to the side wall 11, and secured to the rim of the wheel. The bead 13 includes a bead core 16 and a bead filler 17. The bead core 16 is an annular member composed of a steel bead wire and extending over an entire circumference of the tire, and is embedded within the bead 13. The bead filler 17 has a tapered shape extending radially outward of the tire, and is an annular hard rubber member extending over the entire circumference of the tire.

The carcass 14 extends between the beads 13 and is folded back around the bead core 16 for fixation. The carcass 14 includes a carcass cord made of an organic fiber and a topping rubber. The carcass cord is disposed at substantially a right angle (80° or more and 90° or less) with respect to the tire circumferential direction. Examples of the organic fiber used for the carcass cord include, for example, polyester fiber, rayon fiber, aramid fiber, and nylon fiber.

The inner liner 15 covers an inner surface of the tire between the pair of beads 13. The inner liner 15 is composed of an air permeation resistant rubber and has a function to maintain the air pressure of the pneumatic tire 1.

The pneumatic tire 1 further includes a belt 18 disposed radially outward with respect to the carcass 14, and a cap ply 19 covering the entire outer side of the belt 18 in the tire radial direction. The belt 18 is disposed in an overlapping manner on the outer circumferential side on the top of the carcass 14. The belt 18 is composed of belt plies including rubber-coated cords arranged in the direction inclined with respect to the tire circumferential direction. The cords of the belt 18 may be made of any materials including, for example, an organic fiber such as polyester, rayon, nylon, and aramid, or a metal such as steel. The pneumatic tire 1 may further include an edge ply (not shown) disposed radially outward with respect to the cap ply 19 to cover the opposite ends of the belt 18 in the tire axial direction. The cap ply 19 and the edge ply serve to reinforce the belt 18.

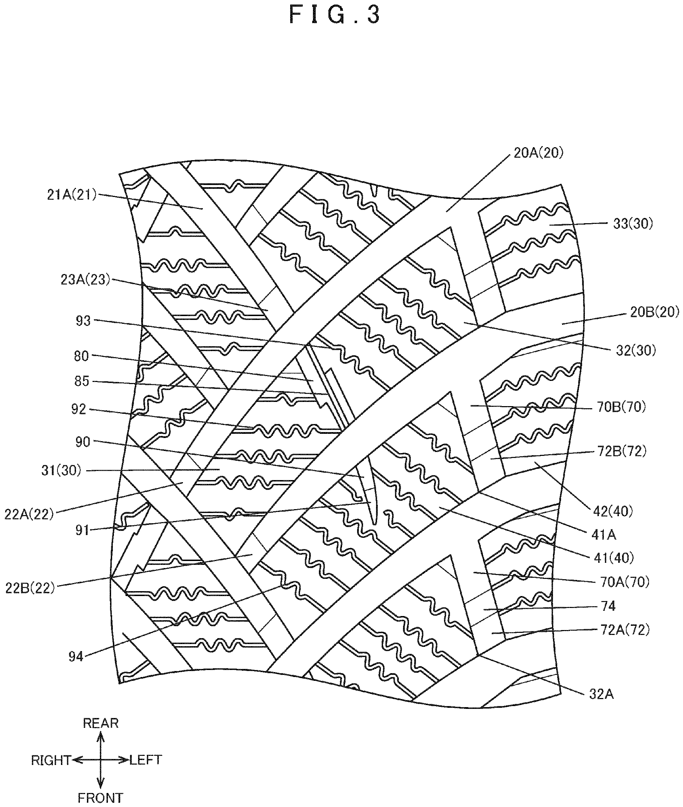

The tread pattern of the pneumatic tire 1 will be described in detail below by reference to FIG. 2 and FIG. 3. FIG. 2 is a plan view of the pneumatic tire 1 (tread 10).

As illustrated in FIG. 2, the tread 10 includes the main grooves 20 and 21 each extending from a portion of the tread 10 adjacent to the equator CL toward the ground contact end and having a greater angle of inclination relative to the tire axial direction in a region adjacent the equator CL than in a region adjacent the ground contact end. The main groove 20 extends from a portion adjacent to the equator CL toward the ground contact end E1, and the main groove 21 extends from a portion adjacent to the equator CL toward the ground contact end E2. The main grooves 20 and 21 are arranged circumferentially on the tire at given intervals.

The main groove 20 includes two types of grooves having different lengths, main grooves 20A and 20B. The main groove 20A is longer than the main groove 20B, and has a length extending past the equator CL to a right region of the tread 10. The main groove 20B is disposed in a left region of the tread 10 and does not extend past the equator CL. The main groove 21 similarly includes two types of grooves having different lengths, main grooves 21A and 21B.

The first block set 30 is disposed on the leading side of the main groove 20A, and the second block set 40 is disposed on the leading side of the main groove 20B. As such, the main groove 20A, the first block set 30, the main groove 20B, and the second block set 40 are sequentially arranged in this order repeatedly along the tire circumferential direction. As described above, the main groove 20A is longer than the main groove 20B, and has a length extending past the equator CL to the right region of the tread 10. The first block set 30 therefore has a length that extends past the equator CL and reaches the right region of the tread 10. The second block set 40, similar to the main groove 20B, has a length that does not extend past the equator CL.

Similarly, in the right region of the tire, the first block set 50 is disposed on the leading side of the main groove 21A, and the second block set 60 is disposed on the leading side of the main groove 21B. As such, the main groove 21A, the first block set 50, the main groove 21B, and the second block set 60 are sequentially arranged in this order repeatedly along the tire circumferential direction. The first block set 50 has a length extending past the equator CL to the left region of the tread 10. The second block set 60 has a length that does not extend past the equator CL. Thus, the first block set 30 and the first block set 50 are arranged in a staggered manner along the equator CL.

In a plan view of the tread 10, the tread pattern according to the present embodiment includes the first block sets 30 and 50 and the second block sets 40 and 60 that are arranged symmetrically with respect to the equator CL, with the first block sets 30 and 50, and the second block sets 40 and 60, being shifted relative to each other by a predetermined circumferential pitch. Specifically, the first block set 30 has the same shape as the first block set 50 that is inverted with respect to the equator CL, and the second block set 40 has the same shape as the second block set 60 that is inverted with respect to the equator CL. This is also the same for the main grooves 20 and 21. The tread pattern according to the present embodiment is well balanced in the left and right direction and is therefore advantageous in enhancement of steering stability.

In a plan view of the tread 10, the main groove 20, the first block set 30, and the second block set 40 are curved to protrude toward the trailing side. Similarly, the main groove 21, the first block set 50, and the second block set 60 are curved to protrude toward the trailing-edge side. As such, all of the main grooves 20 and 21, the first block sets 30 and 50, and the second block sets 40 and 60 are inclined with respect to the tire axial direction to be gradually located on the trailing side from the equator CL toward the ground contact ends E1 and E2.

As described above, the main grooves 20 and 21 have a greater angle of inclination with respect to the tire axial direction in a region adjacent to the equator CL than in regions adjacent to the ground contact ends E1 and E2. In other words, the main grooves 20 and 21 extend closer to the tire axial direction and thus have a gentler inclination with respect to the tire axial direction as the main grooves 20 and 21 extend from a portion adjacent to the equator CL toward portions adjacent the ground contact ends E1 and E2. The angle of inclination of the main grooves 20 and 21 with respect to the tire axial direction is, for example, 30° or more and 60° or less, or 40° or more and 50° or less in a portion adjacent to the equator CL. Disposing the main grooves 20 and 21 to have a greater inclination with respect to the tire axial direction in a portion adjacent to the equator CL than in a portion adjacent to the ground contact end E1 or E2 in the tread pattern including the first block sets 30 and 50 and the second block sets 40 and 60 having different number of blocks, as in the present embodiment, enables shifting, from each other, of the periods of striking sound that occurs when the tread 10 hits the road surface. This further results in dispersion of the peak values of the striking sound to thereby reduce the noise during traveling.

The main groove 20 connects to the main groove 21 in the vicinity of the equator CL. The main groove 20 extends from a cross point with the main groove 21 toward the ground contact end E1 and extends past the ground contact end E1 and across the side rib 12 on the left side. The main groove 21 extends from a crossing point with the main groove 20 in the vicinity of the equator CL toward the ground contact end E2 and extends past the ground contact end E2 and across the side rib 12 on the right side.

While the main grooves 20 and 21 may have a uniform width over the entire lengths, in the present embodiment, the width of the main grooves 20 and 21 gradually increases from a portion adjacent to the equator CL toward a portion adjacent to the ground contact ends E1 and E2. This configuration not only enhances drainage performance but also increases a snow-shearing-force that catches and compacts snow to thereby increase the brake performance on a snowy road surface. The width of the main grooves 20 and 21 is, for example, 2.0 mm or more and 10.0 mm or less in a portion adjacent to the equator CL, and is, for example, 3.0 mm or more and 15.0 mm or less in a portion adjacent to the ground contact ends E1 and E2. The main grooves 20 and 21 have the same depth, which is 5.0 mm or more and 15.0 mm or less, for example. In the present specification, the width of a groove (including a slit and a sipe) refers to the width in a profile face along the ground contact face of the tread 10, unless otherwise specified. The depth of a groove refers to a length in the tire radial direction from a profile face along the ground contact face of the tread 10 to the groove bottom, unless otherwise specified.

The main grooves 20 and 21 include bridges 22 and 23, respectively, at the tip end adjacent to the equator CL. Specifically, the bridge 22 includes a bridge 22A disposed at the tip end of the main groove 20A and a bridge 22B disposed at the tip end of the main groove 20B. The bridge 23 includes a bridge 23A disposed at the tip end of the main groove 21A and a bridge 23B disposed at the tip end of the main groove 21B.

The bridges 22 and 23 are protrusions protruding radially outward of the tire from the groove bottoms of the main grooves 20 and 21, and couple the adjacent center blocks. Specifically, the bridge 22A couples the first center block 31 and the second center block 61, and the bridge 22B couples the first center block 31 and the second center block 41. The bridge 23A couples the second center block 41 and the first center block 51, and the bridge 23B couples the first center block 51 and the second center block 61.

The bridges 22 and 23 couple the center blocks along the tire circumferential direction. This configuration increases block rigidity in the vicinity of the equator CL to thereby enhance the traction performance at the time of braking. Further, the bridges 22 and 23 disposed only at tip ends of the respective main grooves achieve high drainage performance. Thus, including the bridges 22 and 23 enables enhanced traction performance at the time of braking while achieving high drainage performance. The length of the bridges 22 and 23 along the main grooves 20 and 21 may be shorter than the length of bridges 72 and 73 along slits 70 and 71, respectively, for example, as will be described below. The length of the bridges 22 and 23 along the main grooves 20 and 21 is, for example, 0.5 mm or more and 5.0 mm or less.

The bridges 22 and 23 preferably have a height that is 30% or more and 70% or less, or 40% or more and 60% or less, of the depth of the main grooves 20 and 21. The bridges 22 and 23 may each include a slope region having an increasing height as the bridges 22 and 23 extend toward the tip end of the main grooves 20 and 21 adjacent to the equator CL. The slope region of the bridges 22 and 23 facilitates flow of the water within the main grooves 20 and 21 toward the ground contact ends E1 and E2, respectively, to thereby increase the drainage performance of the pneumatic tire 1.

The tread 10 further includes a slit 70 that connects the main grooves 20 along the tire rotational direction, and a slit 71 that connects the main grooves 21 along the tire rotational direction. The slits 70 and 71 are grooves having a width that is smaller than the maximum width of the main grooves 20 and 21. The width of the slit 70 is, for example, 2.0 mm or more and 6.0 mm or less.

The slit 70 is inclined circumferentially of the tire gradually away from the ground contact end E1 as the slit 70 extends from the leading side toward the trailing side. The slit 71 is similarly inclined circumferentially of the tire gradually away from the ground contact end E2 as the slit 71 extends from the leading side toward the trailing side. In the present embodiment, the slits 70 and 71 have the same depth as the main grooves 20 and 21. However, the depth of the slits 70 and 71 may be smaller than those of the main grooves 20 and 21.

The slit 70 includes a slit 70A that defines the first intermediate block 32 and the first shoulder block 33, and a slit 70B that defines the second center block 41 and the second shoulder block 42. As described above, the first block sets 30 and the second block sets 40 are alternately arranged in the tire circumferential direction. Thus, the slit 70A and the slit 70B are also arranged alternately in the tire circumferential direction. The slit 70A and the slit 70B have the same shape.

The slit 71, similar to the slit 70, includes a slit 71A that defines the first intermediate block 52 and the first shoulder block 53, and a slit 71B that defines the second center block 61 and the second shoulder block 62. The slit 71A and the slit 71B are arranged alternately along the tire circumferential direction. The slit 71 has a shape corresponding to the shape of the slit 70 that is inverted with respect to the equator CL. The slit 71A and the slit 71B have the same shape.

The slits 70 and 71 have bridges 72 and 73, respectively, at the groove bottom in the end portion on the leading side, similar to the main grooves 20 and 21. The bridge 72 includes a bridge 72A disposed on the slit 70A and a bridge 72B disposed on the slit 70B. The bridge 73 includes a bridge 73A disposed on the slit 71A and a bridge 73B disposed on the slit 71B.

The bridges 72 and 73 are, similar to the bridges 22 and 23, protrusions protruding outward in the tire radial direction from the groove bottoms of the slits 70 and 71, respectively, and connect adjacent center blocks. Specifically, the bridge 72A connects the first intermediate block 32 and the first shoulder block 33, and the bridge 72B connects the second center block 41 and the second shoulder block 42. The bridge 73A connects the first intermediate block 52 and the first shoulder block 53, and the bridge 73B connects the second center block 61 and the second shoulder block 62.

Including the bridges 72 and 73 reduces in-plane contraction around the slits 70 and 71. This facilitates flow of water through the slits 70 and 71 to thereby increase the drainage performance of the pneumatic tire 1. Further, the bridges 72 and 73 disposed at the end portions on the leading side of the slits 70 and 71 increase the traction performance at the time of braking.

The length of the bridges 72 and 73 along the slits 70 and 71, respectively, is preferably 60% or less of the length of the slits 70 and 71, and is more preferably 50% or less. The bridges 72 and 73 having the length that is 60% or less of the length of the slits 70 and 71 can secure the volume of the slits 70 and 71 to thereby secure the brake performance on snowy road surfaces. Also, the length of the bridges 72 and 73 along the slits 70 and 71, respectively, is preferably 10% or more of the length of the slits 70 and 71, and is more preferably 20% or more. The bridges 72 and 73 having the length that is 10% or more of the length of the slits 70 and 71 significantly increase the drainage performance described above and also significantly increase the traction performance at the time of braking. Therefore, the length of the bridges 72 and 73 along the slits 70 and 71, respectively, is preferably 10% or more and 60% or less of the length of the slits 70 and 71, and is more preferably 20% or more and 50% or less of the length of the slits 70 and 71.

The bridges 72 and 73 preferably have a height that is 30% or more and 70% or less, or 40% or more and 60% or less, of the depth of the slits 70 and 71. In the present embodiment, the bridge 72, 73 includes a slope region 74 (see FIG. 3) having an increasing height toward the leading side of the slit 70, 71. In other words, the slit 70, 71 includes a region having a decreasing depth toward the leading side of the slit 70, 71. The slope region disposed in the bridge 72, 73 facilitates flow of water within the slit 70, 71 toward the main groove 20, 21, thereby increasing drainage performance of the pneumatic tire 1.

The tread 10 further includes, in addition to the slits 70 and 71, a slit 80 that connects the main grooves 20 in the tire rotational direction and a slit 81 that connects the main grooves 21 in the tire rotational direction. The slit 80 defines the first center block 31 and the first intermediate block 32, and the slit 81 defines the first center block 51 and the first intermediate block 52.

The slit 80 is disposed substantially as an extension of the main groove 21A. The slit 80 is opposite to the main groove 21A with the main groove 20A interposed between the slit 80 and the main groove 21A, and is opposite to a slit 90, which will be described below, with the main groove 20B interposed between the slit 80 and the slit 90. Disposing the slit 80 opposite to the main groove 21A with the main groove 20Abeing interposed in between enables accumulation of a lot of snow within the slit 80 during traveling on snowy roads. This results in an increase in the snow-shearing-force for catching and compacting the snow, thereby increasing the brake performance on the snowy road surface. A slit 81 is disposed substantially as an extension of the main groove 20A. The slit 81 is opposite to the main groove 20A with the main groove 21A interposed between the slit 81 and the main groove 20A and is opposite to the slit 90 with the main groove 21B interposed between the slit 81 and the slit 90.

Each slit 80, 81 has a bent shape. The slits 80 and 81 having a bent shape facilitate dispersion of the frequency of noise generated in the slits 80 and 81. This results in a reduction in the noise generated during traveling.

The slit 80, 81 includes, on the bottom face, a sipe 85 (see FIG. 3) extending along a first direction. The sipe 85 is disposed, for example, along the extending direction of the slit 80, 81. Thus, the sipe 85 couples the main grooves 20 and 21 in the tire rotational direction. The sipe 85 disposed on the bottom face of the slit 80, 81 having a bent shape increases steering stability on a dry road surface.

The tread pattern of the pneumatic tire 1 will be described in further detail below by further reference to FIG. 3 that is an enlarged view partially illustrating the tread pattern. As described above, the shape of the first block set 50 is the same as the shape of the first block set 30 that is inverted with respect to the equator CL, and the shape of the second block set 60 is the same as the shape of the second block set 40 that is inverted with respect to the equator CL. Therefore, only the first block set 30 and the second block set 40 will be described below, and the first block set 50 and the second block set 60 will not be described.

As illustrated in FIGs. 2 and 3 and described above, the tread 10 includes the first block sets 30 and the second block sets 40 segmented by the main grooves 20 and having a plurality of blocks. The first block set 30 and the second block set 40 are disposed alternately along the tire circumferential direction. More specifically, the first block set 30 is disposed on the leading side with respect to the main groove 20A, and the second block set 40 is disposed on the leading side with respect to the main groove 20B.

The first block set 30 includes the first center block 31 located adjacent to the equator CL, the first shoulder block 33 located adjacent to the ground contact end E1, and the first intermediate block 32 disposed between the first center block 31 and the first shoulder block 33. The slit 80 that couples two adjacent main grooves 20 in the tire rotational direction is disposed between the first center block 31 and the first intermediate block 32, and the slit 70Athat couples two adjacent main grooves 20 in the tire rotational direction is disposed between the first intermediate block 32 and the first shoulder block 33. Thus, the first center block 31 and the first intermediate block 32 are defined by the slit 80, and the first intermediate block 32 and the first shoulder block 33 are defined by the slit 70A.

The second block set 40 includes the second center block 41 located adjacent to the equator CL, and the second shoulder block 42 located adjacent to the ground contact end E1. The slit 70B that couples two adjacent main grooves 20 in the tire rotational direction is disposed between the second center block 41 and the second shoulder block 42. As such, the second center block 41 and the second shoulder block 42 are defined by the slit 70B.

As described above, the first block set 30 includes three blocks: the first center block 31, the first intermediate block 32, and the first shoulder block 33. The second block set 40 includes two blocks: the second center block 41 and the second shoulder block 42. Here, the noise generated during traveling is significantly affected by the peak values of the frequency of striking sound generated by each block hitting the road surface. In the configuration including the first block set 30 and the second block set 40 having a uniform number of blocks over the entire tire circumference, which is a configuration including the first block set 30 and the second block set 40 having the same number of blocks, the striking sound is likely to occur at a fixed period when the tread 10 hits the road surface, resulting in generation of the peak values of the frequency of the striking sound. This further results in an increase in the noise during traveling. Meanwhile, in the tread pattern according to the present embodiment, the main grooves 20 and 21 are arranged such that the main grooves 20 and 21 are inclined more, with respect to the tire axial direction, in a portion adjacent to the equator CL than in potions adjacent to the ground contact ends E1 and E2, and also the number of blocks included in each block set varies. This configuration allows the periods of the striking sound generated by the tread 10 hitting the road surface to be shifted from each other, which results in dispersion of the frequency of the striking sound to thereby reduce the noise during traveling.

In a plan view of the tread 10, each of the area (S31) of the first center block 31 and the area (S32) of the first intermediate block 32 is preferably smaller than the area (S41) of the second center block 41, and the sum (S31+S32) of the area (S31) of the first center block 31 and the area (S32) of the first intermediate block 32 is preferably greater than the area (S41) of the second center block 41. Therefore, the slit 80 that defines the first center block 31 and the first intermediate block 32 is preferably disposed to satisfy the relations of S31 < S41, S32 < S41, and S31 + S32 > S41. The tread pattern that satisfies the relations of S31 < S41, S32 < S41, and S31 + S32 > S41 allows the blocks to have similar sizes, to thereby provide a pneumatic tire 1 with excellent wear resistance. In other words, the tread pattern that does not satisfy the relations of S31 < S41, S32 < S41, and S31 + S32 > S41 makes the blocks have significantly different areas and is likely to cause uneven tire wear in small-size blocks.

In a plan view of the tread 10, the area (S31) of the first center block 31 is preferably 75% or more and 125% or less, and is more preferably 80% or more and 120% or less, of the area (S32) of the first intermediate block 32. The first center block 31 having an area (S31) that is 75% or more and 125% or less of the area (S32) of the first intermediate block 32 provides a pneumatic tire 1 with even better wear resistance.

As illustrated in FIG. 3, in a plan view of the tread 10, an outward edge 32A of the first intermediate block 32 in the tire axial direction and an outward edge 41A of the second center block 41 in the tire axial direction are aligned along the tire circumferential direction.

The first center block 31 is preferably disposed across the equator CL and the second center block 41 is preferably disposed so as not to extend across the equator CL. This configuration facilitates allowing the variation range of the ground contact length at a contact front edge obtained by full rotation of the tire, which will be described below, to fall within a range of ±20% with respect to the center value, thereby enabling further reduction of the noise during traveling.

The lengths of the first center block 31 and the first intermediate block 32 in the tire axial direction are respectively 10% or more and 30% or less, for example, of a ground contact width D (see FIG. 2). The axial length of the second center block 41 is 15% or more and 40% or less of the ground contact width D, for example.

The second center block 41 includes the slit 90 that extends inward of the second center block 41 from the main groove 20B and terminates within the second center block 41. The slit 90 is disposed substantially as an extension of the main groove 21A and is disposed opposite to the slit 80 with the main groove 20B being disposed between the slit 90 and the slit 80. During traveling of a vehicle on a snowy road, the slit 90 provides a snow-shearing force for catching and compacting the snow. As such, the slit 90 contributes to enhancement of brake performance of the pneumatic tire 1 on snowy road surfaces.

The slit 90 that terminates within the second center block 41 can secure the volume of the second center block 41 to thereby prevent lowering of the block rigidity. This results in an increase in the brake performance on snowy road surfaces while securing the traction performance at the time of braking. In terms of securing the wearing resistance of the pneumatic tire 1, the slit 90 is preferably disposed on the trailing side of the second center block 41.

The slit 90 is inclined both circumferentially and axially of the tire. This configuration enables working of both circumferential and axial edge effects, to thereby more significantly enhance the brake performance on snowy road surfaces. The slit 90 is inclined more in the tire axis direction than in the tire circumferential direction, for example. An example angle of inclination of the slit 90 in the tire axis direction is 60° or more and less than 90°.

The slit 90 has a width at an edge closer to the main groove 20B, which is smaller than the width of the slit 70. The width of the slit 90, at an edge closer to the main groove 20B is 1.5 mm or more and 3.0 mm or less. The slit 90 further includes a narrow region 91 having a decreasing width toward the inside of the second center block 41. As such, the slit 90 has a tapered shape having a decreasing width toward the tip end. The slit 90 having the narrow region 91 further ensures the volume of the second center block 41, inhibiting lowering of the block rigidity. The width of the slit 90 in the narrow region 91 may be decreased linearly or non-linearly.

The depth of the slit 90 may be uniform over the entire extending direction of the slit 90. In the present embodiment, the tip end of the slit 90 has a decreasing depth toward the inside of the second center block 41. The depth of the slit 90 at an end closer to the main groove 20B is substantially the same as the depth of a portion of the main groove 20 including the bridge 22. The depth of the slit 90, at the end adjacent to the main groove 20B, is 30% or more and 90% or less of the depth of the main groove 20 and is preferably 40% or more and 80% or less of the depth of the main groove 20.

As illustrated in FIG. 3, the first center block 31 includes a plurality of sipes (corresponding to first sipes) 92 traversing the first center block 31, and the first intermediate block 32 includes a plurality of sipes (corresponding to second sipes) 93 traversing the first intermediate block 32.

In a plan view of the tread 10, the straight line connecting the opposite ends of the sipe 92 in the longitudinal direction extends along the tire axis direction, and the straight line connecting the opposite ends of the sipe 93 in the longitudinal direction is inclined with respect to the tire axis direction. As such, the sipe 92 extends along the tire axial direction, and the sipe 93 extends in the direction that is inclined with respect to the tire axial direction. The sipes 92 and the sipes 93 having different extending directions increase the steering stability on dry road surfaces. The angle of inclination of the sipe 93 with respect to the tire axial direction is, for example, 20° or more and 70° or less.

The sipes 92 and 93 are preferably wavy sipes. In order to increase the brake performance on a snow road surface, it is necessary to increase the number of sipes to thereby increase the number of edges. However, the increased number of sipes excessively reduces the block rigidity, for example, and decreases the contact area due to collapsing of the blocks. Excessive falling of the blocks reduces steering stability on a dry road surface. In the present embodiment, employing wavy sipes 92 and 93 enables an increase of the edges without increasing the number of sipes. This results in securing of the steering stability on the dry road surface while increasing brake performance on the snowy road surface.

The waves of the sipe 92, 93 are protruding portions that are orthogonal to the longitudinal direction of the sipe 92, 93, and have a triangular shape in a plan view. The sipe 92, 93 includes a linear portion that is a straight line and a wavy portion including a plurality of repeated waves. The linear portion is disposed at each end of the sipe 92, 93 in the longitudinal direction, and the wavy portion is disposed between the linear portions. The wavy portion is bent in a zigzag shape to protrude toward opposite sides of a center line connecting the longitudinal ends of the sipe 92, 93.

The amplitudes of the sipes 92 and 93 are uniform for all waves, for example, and the wavy portions of the sipes 92 and 93 are regularly formed at a predetermined period. An example amplitude of the sipe 92, 93 is 0.5 mm or more and 3.0 mm or less. In the present specification, the amplitude of the sipe refers to a distance from the center line connecting the opposite ends of the sipe 92, 93 in the longitudinal direction to the peak of the maximum wave.

The depth of the sipe 92, 93 is, for example, 10% or more and 100% or less of the depth of the main groove 20. The wavy form of the sipe 92, 93 may have a greater depth than the linear portion. In other words, the sipe 92, 93 may have a greater depth in the center part in the longitudinal direction than in the opposite end parts. Further, each sipe 92, 93 may have a different depth.

The second center block 41 includes a plurality of sipes 94 traversing the second center block 41. The sipe 94 is a wavy sipe, and extends in an inclined manner with respect to the tire axial direction. The angle of inclination of the sipe 94 with respect to the tire axial direction is substantially the same as the angle of inclination of the sipe 93 with respect to the tire axial direction, for example.

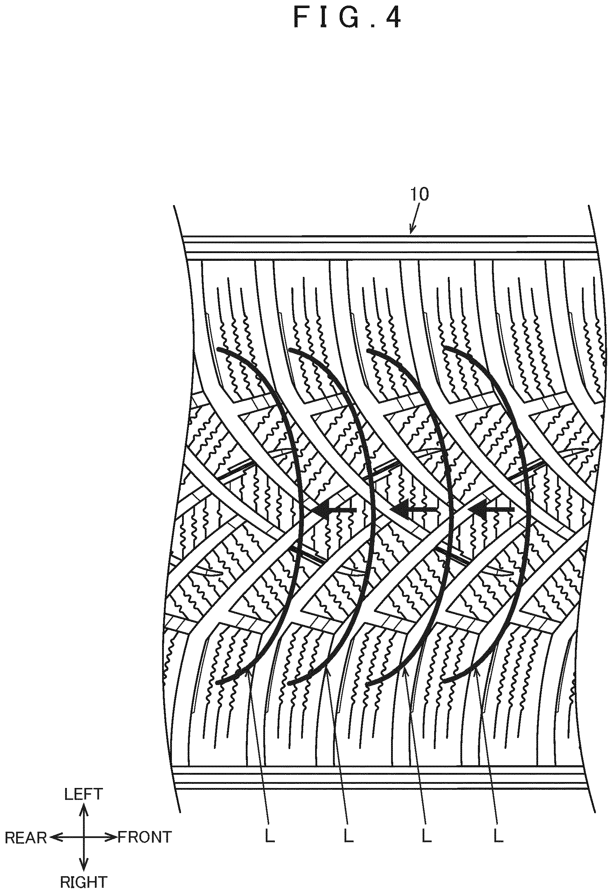

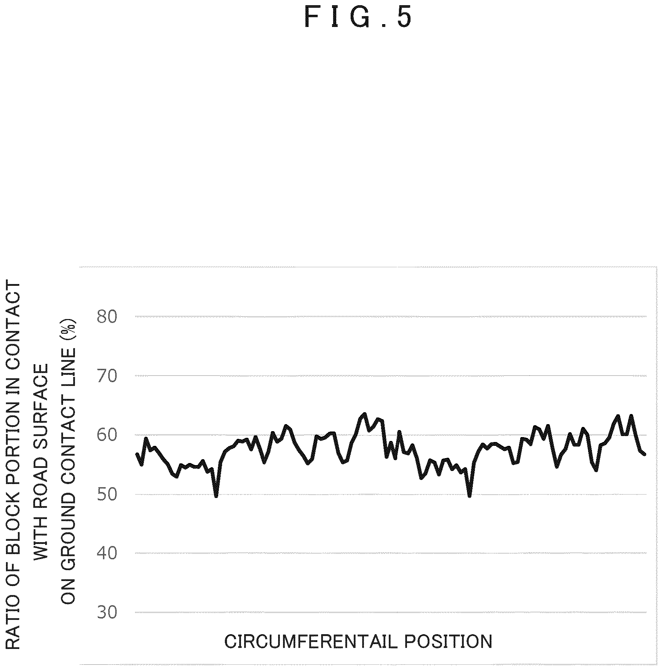

The variation range of the contact length at the ground contact front edge during traveling of the pneumatic tire 1 will be described by reference to FIG. 4 and FIG. 5. FIG. 4 schematically shows a change of a ground contact line of the tread 10 during traveling of the pneumatic tire 1. FIG. 5 shows a variation range of the contact length at the ground contact front edge of the pneumatic tire 1 according to the present embodiment for a single full rotation of the pneumatic tire 1 .

As illustrated in FIG. 4, the ground contact line L of the tread 10 has a substantially arc shape protruding at the center in the tire axial direction. The ground contact line L as used herein refers to a borderline on the leading side, of the borderline of the ground contact face of an unused pneumatic tire 1 mounted on a normal rim and inflated to the normal internal pressure, to which a predetermined load (corresponding to 70% of the normal load) is applied. Thus, the ground contact line L is a portion where the pneumatic tire 1 starts to contact the road surface during traveling.

As illustrated in FIG. 4, with the traveling of the pneumatic tire 1, the ground contact line L moves to the leading side (moves rearward). At this time, the contact length of each ground contact line L gradually changes in accordance with the tread pattern. Here, the contact length of the ground contact line L refers to the length of a portion of the ground contact line L that actually contacts the road surface.

The amount of change of the contact length of the ground contact line L significantly affects the noise that is made during traveling. As indicated in FIG. 5, in the tread pattern of the pneumatic tire 1 according to the present embodiment, the contact lengths of the ground contact lines L fall within ±20% with respect to the center value for a single full rotation of the tire 1. More specifically, in the present embodiment, the relations of X ≦ Z × 1.20, and Y ≧ Z × 0.80 are satisfied, where X is the maximum value of the contact length obtained when moving the ground contact line L over the full rotation of the tire, Y is the minimum value of the contact length, and Z((X + Y)/2) is the center value of the contact length. The contact length of the ground contact line L falling within the range of ±20% with respect to the center value over the full rotation of the tire 1 enables reduction in the noise during traveling.

The contact length of the ground contact line L preferably falls within the range of ±18% with respect to the center value over the full rotation of the tire 1, and more preferably falls within the range of ±16%. This configuration enables further reduction in the noise during traveling. The amount of change of the contact length of the ground contact line L is adjustable according to the arrangement of the tread pattern as described above. In particular, the tread pattern according to the present embodiment including the main grooves 20 and 21 arranged to be inclined more, with respect to the tire axial direction, in a portion adjacent to the equator CL than in portions adjacent to the ground contact ends E1 and E2, and including the first block sets 30 and the second block set 40 having different numbers of blocks, enables a small amount of change in the contact length of the ground contact line L.

As described above, the tread pattern including the main grooves 20 and 21 arranged to be inclined more, with respect to the tire axial direction, in a portion adjacent to the equator CL than in portions adjacent to the ground contact ends E1 and E2, and including the first block sets 30 and the second block set 40 having different numbers of blocks, enables a shift, from each other, of the periods of the striking sound generated when the tread 10 hits the road surface. This results in dispersion of the frequency of the striking sound to thereby reduce the noise during traveling.

### Reference Signs List

1 pneumatic tire, 10 tread, 11 side wall, 12 side rib, 13 bead, 14 carcass, 15 inner liner, 16 bead core, 17 bead filler, 18 belt, 19 cap ply, 20, 20A, 20B, 21, 21A, 21B main groove, 22, 22A, 22B, 23, 23A, 23B bridge, 30 first block set, 31 first center block, 32 first intermediate block, 32A outward edge, 33 first shoulder block, 40 second block set, 41 second center block, 41A outward edge, 42 second shoulder block, 50 first block set, 51 first center block, 52 first intermediate block, 53 first shoulder block, 60 second block set, 61 second center block, 62 second shoulder block, 70, 70A, 70B, 71, 71A, 71B slit, 72, 72A, 72B, 73, 73A, 73B bridge, 74 slope region, 80, 81 slit, 85 sipe, 90 slit, 91 narrow region, 92 sipe (first sipe), 93 sipe (second sipe).

## Claims

1. A pneumatic tire (1) comprising a tread (10) and having a specified rotational direction,
the tread (10) including:
plurality of main grooves (20, 21) extending from a portion of the tread (10) adjacent to a tread center line toward a portion of the tread (10) adjacent to a ground contact end, the main grooves (20, 21) being arranged at intervals along a tire circumferential direction; and
a first block set (30, 50) and a second block set (40, 60) disposed along the main grooves (20, 21) and arranged alternately along the tire circumferential direction, with the main grooves (20, 21) being disposed between the first block set (30, 50) and the second block set (40, 60); wherein
each of the main grooves (20, 21) is inclined more, with respect to a tire axial direction, in a portion adjacent to the tread center line than in a portion adjacent to the ground contact end,
each of the first block set (30, 50) and the second block set (40, 60) includes a plurality of blocks, and
the first block set (30, 50) and the second block set (40, 60) include different numbers of blocks.

2. The pneumatic tire according to claim 1, wherein
the pneumatic tire mounted on a normal rim and inflated to a normal internal pressure, to which a predetermined load is applied and which is rotated by a full rotation, has a variation range of a contact length of a ground contact line that falls within ±20% with respect to a center value over the full rotation of the tire.

3. The pneumatic tire according to claim 1 or 2, wherein
the block set (30, 50) includes a first center block (31, 51) located adjacent to the tread center line, a first shoulder block (33, 53) located adjacent to the ground contact end, and a first intermediate block (32, 52) disposed between the first center block (31, 51) and the first shoulder block (33, 53), and
the second block set (40, 60) includes a second center block (41, 61) located adjacent to the tread center line and a second shoulder block (42, 62) located adjacent to the ground contact end.

4. The pneumatic tire according to claim 3, wherein
in a plan view of the tread (10), the first center block (31, 51) and the first intermediate block (32, 52) have areas that are smaller than an area of the second center block (41, 61), and a sum of the area of the first center block (31, 51) and the area of the first intermediate block (32, 52) is greater than the area of the second center block (41, 61).

5. The pneumatic tire according to claim 3 or 4, wherein
in a plan view of the tread (10), the first center block (31, 51) has an area that is 75% or more and 125% or less of an area of the first intermediate block (32, 52).

6. The pneumatic tire according to any one of claims 3 to 5, wherein
the first center block (31, 51) and the first intermediate block (32, 52) are separated by a slit having a bent shape.

7. The pneumatic tire according to any one of claims 3 to 6, wherein
in a plan view of the tread (10), an outward edge of the first intermediate block (32, 52) in the tire axial direction and an outward edge of the second center block (41, 61) in the tire axial direction are aligned along the tire circumferential direction.

8. The pneumatic tire according to any one of claims 3 to 7, wherein
the first center block (31, 51) is disposed across the tread center line, and the second center block (41, 61) is not disposed across the tread center line.

9. The pneumatic tire according to any one of claims 1 to 8, wherein
the main grooves (20, 21) have an angle of inclination with respect to the tire axial direction, the angle of inclination on the tread center line being 30° or more and 60° or less.

10. The pneumatic tire according to any one of claims 3 to 8, wherein
the second center block (41, 61) includes a slit extending from the main grooves (20, 21) inward of the second center block (41, 61) and terminating inside the second center block (41, 61).

11. The pneumatic tire according to claim 10, wherein
the slit has a narrow region having a decreasing width as the slit extends inward of the second center block (41, 61).

12. The pneumatic tire according to any one of claims 3 to 8, wherein
the first center block (31, 51) includes a first sipe (92) that traverses the first center block (31, 51),
the first intermediate block (32, 52) includes a second sipe (93) that traverses the first intermediate block (32, 52),
in a plan view, the first sipe (92) includes a straight line connecting opposite longitudinal ends of the first sipe (92), the straight line extending along the tire axial direction, and
in a plan view, the second sipe (93) includes a straight line connecting opposite longitudinal ends of the second sipe (92), the straight line being inclined with respect to the tire axial direction.

13. The pneumatic tire according to claim 12, wherein
in a plan view, the first sipe (92) and the second sipe (93) are disposed in a wavy manner.
